# EUROPÄISCHE PATENTANMELDUNG

(11) **EP 1 935 755 A1**
(43) Veröffentlichungstag der Anmeldung: **25.06.2008**
(21) Anmeldenummer: 07123420.7
(22) Anmeldetag: 18.12.2007
(51) Int. Cl.: B62D 5/04

(54) **Lenkhilfsantrieb mit einem verbesserten Gehäuse, insbesondere zur Aufnahme eines Riemengetriebes**

(30) Priorität: 11.01.2007 DE 102007001638; 19.12.2006 DE 102006059948
(71) Anmelder: ZF-Lenksysteme GmbH, 73527 Schwäbisch Gmünd (DE)
(72) Erfinder: Hauck, Michael, 73630, Remshalden (DE); Budaker, Martin, 73540, Heubach (DE); Karch, Gerald, 73527, Schwäbisch Gmünd (DE); Stöckle, Mario, 73525, Schwäbisch Gmünd (DE)

(57) **Zusammenfassung**

Lenkhilfsantrieb für eine Lenkeinrichtung eines Kraftfahrzeugs zur Lenkkraftunterstützung mit einem Gehäuse (1), in und/oder an dem wenigstens ein Motor (2) aufgenommen ist, welcher mit einer Ausgangswelle (3) antreibend gekoppelt ist, wobei dass der Lenkhilfsantrieb einen plattenartigen Aufnahmekörper (4) zur Aufnahme wenigstens einer Antriebskomponente aufweist, wobei der Aufnahmekörper (4) wenigstens einen Teil des Gehäuses (1) bildet. Hierdurch wird ein Lenkhilfsantrieb für eine Lenkeinrichtung mit einem verbesserten Gehäuse geschaffen, welcher die Nachteile des Standes der Technik vermeidet und eine einfache Integration der Komponenten des Lenkhilfsantriebs ermöglicht.

## Beschreibung

Die vorliegende Erfindung betrifft einen Lenkhilfsantrieb für eine Lenkeinrichtung eines Kraftfahrzeugs zur Lenkkraftunterstützung mit einem Gehäuse, in und/oder an dem wenigstens ein Motor aufgenommen ist, welcher mit einer Ausgangswelle antreibend gekoppelt ist. Die Erfindung richtet sich insbesondere auf einen Lenkhilfsantrieb nach der Art der so genannten EPS-Hilfsantriebe, welche elektrisch angetriebene Systeme betreffen und sich daher von hydraulisch unterstützenden Systemen unterscheiden (EPS: Electric Power Steering). Diese Systeme nutzen die motorische Kraft zur Lenkkraftunterstützung, welche mittels eines Getriebes übertragen wird.

Die Offenlegungsschrift DE 103 36 867 A1 beschreibt einen Lenkhilfsantrieb für eine Lenkeinrichtung eines Kraftfahrzeugs, welcher ein Lenkgetriebe mit einer Lenkstange, einen elektrischen Motor zu Erzeugung der Hilfskraft, der seitlich neben der Längsstange angeordnet ist, ein Lenkgetriebegehäuse, welches das Lenkgetriebe mit der Lenkstange aufnimmt und ein Motorgehäuse, das den elektrischen Motor aufnimmt, aufweist. Das Lenkgetriebegehäuse besteht aus zwei Gehäuseteilen, die hohlraumbildend aufeinander gebracht sind.

Die Offenlegungsschrift DE 103 53 161 A1 offenbart ebenfalls einen Lenkhilfsantrieb für eine Lenkeinrichtung eines Kraftfahrzeugs. Der Lenkhilfsantrieb umfasst ein Gehäuse mit einer Lenkstange, einen elektrischen Motor zu Erzeugung einer Hilfskraft, der seitlich neben der Lenkstange angeordnet ist, ein Antriebsrad, das durch den Motor angetrieben ist, ein Abtriebsrad, das über das Antriebsrad angetrieben ist, und einen Kugelgewindetrieb, der mit der Lenkstange in Eingriff steht und mit dem Abtriebsrad drehfest verbunden ist. Das Gehäuse des Lenkhilfsantriebs weist zwei schalenartige Gehäuseteile auf, zwischen denen eine Zwischenwand zur Aufnahme des Motors vorgesehen ist.

Bei einer derartigen Anordnung von Lenkhilfsantrieben und insbesondere bei derartigen Ausführungen der Gehäuse entsteht das Problem, dass die Gehäusekomponenten oft kompliziert und aufwendig hergestellt werden müssen. Die Gehäusekomponenten werden vorzugsweise im Aluminium-Druckgussverfahren hergestellt, und anschließend spanend nachbearbeitet. Radiale Passungen zwischen den Einzelkomponenten sind die Regel. Die zur Verbindung notwendigen Verbindungselemente sind häufig als Schrauben ausgeführt, wobei die Zugänglichkeit der Verbindungselemente während der Montage häufig sehr stark eingeschränkt ist. Ferner sind Strukturkomponenten erforderlich, um die kraftaufnehmenden Antriebskomponenten im bzw. am Gehäuse zu befestigen.

Daher besteht der Bedarf nach einem flexiblen Gehäusekonzept mit einer einfachen Gestaltung der Bauteile bezüglich der Anpassung an verschiedene Fahrzeugbauräume, welches kostengünstig umsetzbar ist und sich durch eine verbesserte Montagefreundlichkeit auszeichnet. Daraus resultiert ferner der Wunsch nach einem minimalen Aufwand bezüglich der Verbindungselemente und der Verbindungsprozesse, so dass weitgehend auf Passungen verzichtet werden soll. Auch die elektrischen Verbindungen für die Leistungsanbindung des Motors sowie einer entsprechenden Sensorik sollen montagefreundlich durch die Gehäusewandung hindurch geführt verlegt werden.

Es ist daher die Aufgabe der vorliegenden Erfindung, einen Lenkhilfsantrieb für eine Lenkeinrichtung mit einem verbesserten Gehäuse zu schaffen, welcher die Nachteile des vorgenannten Standes der Technik vermeidet und eine einfache Integration der Komponenten des Lenkhilfsantriebs ermöglicht.

Diese Aufgabe wird von einem Lenkhilfsantrieb für eine Lenkeinrichtung mit den Merkmalen des Anspruchs 1 gelöst. Vorteilhafte Weiterbildungen der Erfindung sind in den abhängigen Ansprüchen angegeben.

Die Erfindung schließt die technische Lehre ein, dass der Lenkhilfsantrieb einen plattenartigen Aufnahmekörper zur Aufnahme wenigstens einer Antriebskomponente aufweist, wobei der Aufnahmekörper wenigstens einen Teil des Gehäuses bildet.

Die Erfindung geht dabei von dem Gedanken aus, dass der plattenartige Aufnahmekörper derart ausgestaltet ist, dass die Aufnahme wenigstens einer Antriebskomponente ermöglicht ist. Die Antriebskomponente kann beispielsweise der Motor, die Zwischenwelle, die Ausgangswelle oder sonstige Komponenten wie Lagerungen umfassen, welche im Gehäuse integriert werden oder zumindest am Gehäuse angeordnet werden sollen. Der Aufnahmekörper kann dabei ein- oder mehrteilig sein, und bildet eine Montageplatte, die scheibenförmig oder plattenförmig wenigstens einen Teil der Gehäuseaußenwand bildet. Als Herstellungsverfahren für den plattenartigen Aufnahmekörper kommen alle Gießverfahren, Sinter- und vor allem Umformverfahren wie Stanzen und/oder Tiefziehen in Frage. Wenn der Aufnahmekörper im Aluminium-Druckgussverfahren hergestellt wird, ergibt sich auf besonders einfache Weise die Möglichkeit, geometrische Anformungen wie Durchgänge, Verbindungselemente, Zapfen und der gleichen vorzusehen, um die einzelnen Antriebskomponenten zu befestigen. Beispielsweise kann die Antriebskomponente als Motor mit einem Motorflansch ausgebildet sein, wobei ein Teil des Aufnahmekörpers den Motorflansch bildet. Dieser meist kreisförmige ausgeführte Motorflansch kann im Sinne der vorliegenden Erfindung als Anformung am Aufnahmekörper vorgesehen sein. Der Aufnahmekörper kann dabei eine Gehäuseanformung aufweisen, so dass ein weiterer Gehäusebereich durch den Aufnahmekörper gebildet wird. So kann der Aufnahmekörper im Wesentlichen plattenartig ausgebildet sein. Eine weitere Antriebskomponente kann beispielsweise eine Wellenlagerung sein, wobei der Aufnahmekörper eine Lageraufnahmehülse umfasst, um die Wellenlagerung aufzunehmen. Die Lageraufnahmehülse kann dabei materialeinheitlich und einstückig mit dem Aufnahmekörper ausgebildet oder als separate Lageraufnahmehülse ausgestaltet sein, welche mit dem Aufnahmekörper mittels eines Einpressens, Anschweißens, eines Lötens oder eines Verschraubens mit dem Aufnahmekörper oder einem umformtechnischen Prozess wie z.B. Nieten verbunden wird. Die Lageraufnahmehülse bildet lediglich ein rohrförmiges Element, in welches die Lager eingebracht werden, um die Wellenlagerung zu schaffen. Ferner besteht die Möglichkeit, das rohrförmige Element als Teil des Plattenteils durch ein Tiefziehen oder Gießen herzustellen, was eine weitere kostengünstige Technologie zur Fertigung des Aufnahmekörpers mit einer eingeformten Lageraufnahmehülse darstellt.

Eine vorteilhafte Weiterbildung der Erfindung sieht vor, dass die Antriebskomponente ein Drehübertragungsglied ist, welches als Getriebezwischenstufe zur antreibenden Kopplung zwischen einem Motor und der Ausgangswelle ausgebildet ist, so dass das Drehübertragungsglied mittels einer Achse und/oder einer Welle im oder am Aufnahmekörper angeordnet ist. Dabei kann eine besonders vorteilhafte Weiterbildung derart ausgestaltet sein, dass zur antreibenden Kopplung zwischen dem Motor und der Ausgangswelle ein mehrstufiges Zugmittelgetriebe, insbesondere ein Riemengetriebe, bevorzugt ein zweistufiges Zahnriemengetriebe, vorgesehen ist. Dabei wird die Kraft zur Lenkunterstützung mittels des mehrstufigen Riemengetriebes, vorzugsweise des zweistufigen Zahnriemengetriebes vom Motor auf die Ausgangswelle übertragen. Das Getriebe wird somit in einem Gehäuse integriert, das zugleich das Gehäuse und die tragende Struktur des gesamten Lenkhilfsantriebes bildet.
Das Drehübertragungsglied bildet eine Zwischenriemenscheibe, wobei ein Riemenscheibenabschnitt mit der Motorwelle und ein weiterer Riemenabschnitt mit der Abtriebswelle antreibend in Verbindung gebracht ist. Damit besteht die Möglichkeit, das Untersetzungsverhältnis zwischen der Drehzahl der Motorwelle und der Drehzahl der Ausgangswelle zu erhöhen, wobei auch mehrere Zwischenwellen bei einer mehrfachen Getriebezwischenstufe vorgesehen sein können, so dass mehrere Drehübertragungsglieder hintereinander antreibend gekoppelt sind. Jede einzelne Getriebezwischenstufe umfasst eine Achse, um die das Drehübertragungsglied rotiert, wobei die Achse selber rotieren kann und als Welle ausgebildet ist oder starr mit dem Aufnahmekörper verbunden ist, und das Drehübertragungsglied in Gestalt einer Rolle um die Achse gelagert ist und um diese rotiert.

Eine weitere vorteilhafte Ausführungsform der Erfindung sieht vor, dass die Welle in wenigstens einer ersten Lagerung drehbar gelagert ist, wobei die Lagerung selbst im Aufnahmekörper aufgenommen ist. Hierfür kann eine Lagerhülse in einer Anformung im Aufnahmekörper eingebracht sein, in der die Lagerung aufgenommen ist. Die als Welle ausgeführte Aufnahme des Drehübertragungsgliedes rotiert daher in der Lagerung innerhalb der Lagerhülse, die im Aufnahmekörper angeordnet ist.

Vorteilhafterweise weist der Aufnahmekörper eine Aufnahme für einen Kabelabgang und/oder einen Kabeldurchgang auf. Die Kabel können beispielsweise zur Leistungsversorgung des elektrischen Motors des Hilfsantriebs verlegt werden oder betreffen die Verkabelung einer Sensorik, die für den Betrieb des Lenkhilfsantriebs erforderlich ist.

Gemäß einer weiteren vorteilhaften Ausführungsform ist zwischen dem als Teil des Gehäuses ausgebildeten Aufnahmekörper und wenigstens einem weiteren Gehäuseteil ein Dichtelement angeordnet. Damit wird eine Abdichtung des Aufnahmekörpers zum übrigen Gehäuseteil erreicht, wobei der Aufnahmekörper einen eigenen Gehäuseteil ausbildet.

Das Gehäuse kann einen Gehäusedeckel aufweisen, welcher auf dem Aufnahmekörper aufgesetzt ist. Der Gehäusedeckel bildet dabei als vorzugsweise einteilige Komponente den übrigen Teil des gesamten Gehäuses des Lenkhilfsantriebes, so dass der Aufnahmekörper eine Art Montageplatte oder Grundplatte bildet, auf die der Gehäusedeckel haubenartig aufgesetzt wird. Dabei besteht die Möglichkeit, dass im Gehäusedeckel selbst weitere Lagerungen aufgenommen sind, welche konzentrisch zu den Lagerungen im Aufnahmekörper angeordnet sind, so dass die Wellen zusätzlich gelagert und stabilisiert werden können. Die Welle dient dabei wie obenstehend ausgeführt als Abtriebswelle oder zur Aufnahme des Drehübertragungsgliedes, beispielsweise einer Zwischenriemenscheibe eines zweistufigen Riemengetriebes, so dass eine konzentrische Anordnung der zweiten Lagerung zur ersten Lagerung eine beidseitige Lagerung der Welle für das Drehübertragungsglied ermöglicht. Die Rotationsachsen der beiden Lagerungen fluchten dabei ineinander, wobei das Erfordernis entsteht, dass das Gehäuse genau auf dem Aufnahmekörper positioniert wird, was über radial ausgebildete Passungen erfolgen kann. Vorzugsweise wird auf Passungen verzichtet und die Flucht bzw. die Konzentrizität im Montageprozess eingestellt.

Eine weitere Ausführungsform des Lenkhilfsantriebs sieht vor, dass der Gehäusedeckel wenigstens als Teilkomponente einer Lenksäule ausgebildet ist, so dass sich ein rohrförmig oder hülsenförmig angeformter Bereich am Gehäusedeckel befindet. Beispielsweise kann die untere Lenksäule eines Lenksäulen-Lenksystems in den Gehäusedeckel integriert sein, was beispielsweise durch eine einteilige Ausgestaltung des Gehäusedeckels geschieht. Hier sei ein Tiefziehen oder ein Gießen als eine mögliche Herstellungsvariante erwähnt, wobei die Anformung, die die Lenksäule bildet, auch mittels eines Fügeverfahrens an den übrigen Gehäusedeckel angebracht sein kann, so dass diese beispielsweise durch ein Aufpressen, ein Anschweißen, ein Anlöten oder ein Einformen verbunden wird.

Gemäß einer weiteren vorteilhaften Ausgestaltung des Gehäuses des Lenkhilfsantriebs weist der Aufnahmekörper wenigstens ein Halteloch und/oder wenigstens ein Montageloch auf, um den Aufnahmekörper auf einem Werkstückträger für die Montage aufzunehmen bzw. im Kraftfahrzeug zu befestigen. Die Löcher können einzelne Durchbrüche umfassen, welche als runde Löcher oder als Langlöcher ausgestaltet sein können. Insbesondere für die Fertigung des Bauteils und während der Montage ist eine sichere Aufnahme auf einem Werkstückträger erforderlich, wozu Montagelöcher vorgesehen sein können, die im späteren Einsatz der Aufnahmeplatte des Lenkhilfsantriebs nicht unbedingt erforderlich sind. Eine besonders vorteilhafte Ausführung kann natürlich darin gesehen werden, die Montagelöcher und die Aufnahmelöcher gemeinsam als ein jeweiliges Loch auszugestalten, so dass die Montagelöcher während der Montage später die Aufnahmelöcher bilden.

Noch eine weitere vorteilhafte Ausführungsform der vorliegenden Erfindung sieht vor, dass Schraubverbindungen, Schweißen, Löten, Nieten oder Umformen für eine sichere Verbindung des Deckels auf dem Aufnahmekörper vorgesehen sind. Für eine umformtechnische Verbindungen werden beispielsweise Formelemente (Laschen) des einen Teils in entsprechende Ausnehmungen des anderen teils eingebracht und umgeformt (umgebogen, verdrillt, etc.). Noch eine vorteilhafte Ausführungsform sieht vor, dass die Aufnahme für ein Fahrzeug im Aufnahmekörper und/oder Deckel integriert ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Seitenansicht des Aufnahmekörpers, welcher mit einem Motorflansch zur Aufnahme eines Motors ausgebildet ist;
- Figur 2: eine quergeschnittene Seitenansicht des Aufnahmekörpers mit weiteren Gehäuseanformungen;
- Figur 3: den Aufnahmekörper, an welchem eine integrierte Lageraufnahmehülse zur Aufnahme einer Wellenlagerung dargestellt ist;
- Figur 4: eine Ausführung einer Lageraufnahmehülse, welche mittels eines Fügeverfahrens an den Aufnahmekörper angebracht ist;
- Figur 5: eine quergeschnittene Seitenansicht des Aufnahmekörpers, an dem eine Achse zur Aufnahme eines Drehübertragungsgliedes angebracht ist;
- Figur 6: eine quergeschnittene Seitenansicht eines Aufnahmekörpers, in welchem eine Welle aufgenommen ist, um das Drehübertragungsglied drehend am Aufnahmekörper anzuordnen;
- Figur 7: eine quergeschnittene Seitenansicht des Aufnahmekörpers sowie eines als Gehäusedeckel ausgeführten weiteren Gehäuseteils;
- Figur 8: einen Gehäusedeckel, an welchem eine Lenksäule angeformt ist;
- Figur 9: eine weitere Ausführungsform des Gehäusedeckels, an welchem die Lenksäule mittels eines Fügeverfahrens angeordnet ist; und
- Figur 10: eine Draufsicht auf eine weitere Ausführungsform eines Aufnahmekörpers, welcher sowohl Haltelöcher als auch Montagelöcher umfasst.

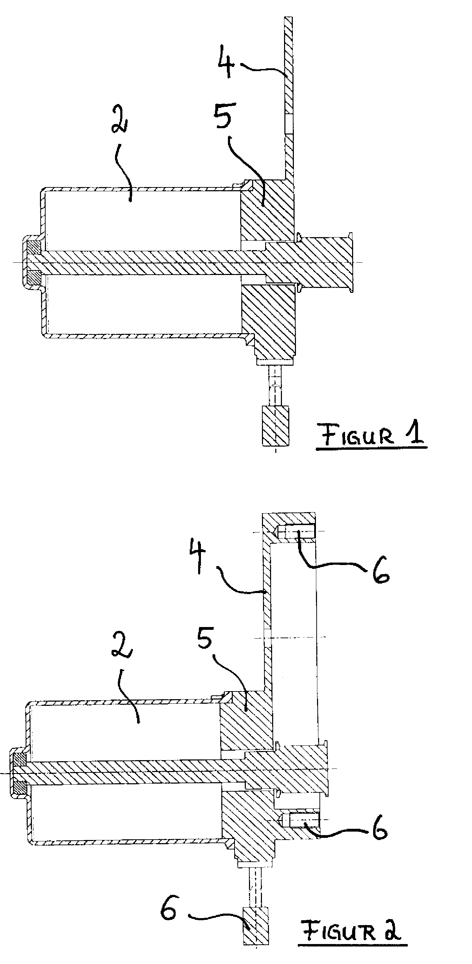

Figur 1 zeigt ein mögliches Ausführungsbeispiel eines Aufnahmekörpers 4 im Sinne der vorliegenden Erfindung. Der Aufnahmekörper 4 bildet einen Teil des Gehäuses des Lenkhilfsantriebs für eine Lenkungseinrichtung eines Kraftfahrzeugs, wobei aus Gründen der Vereinfachung der Lenkhilfsantrieb und das Gehäuse desselben nicht detailliert dargestellt sind. Der Aufnahmekörper 4 ist plattenartig oder scheibenartig ausgeführt, und weist eine gewisse Wanddicke auf, welche über einen weiten Bereich des plattenartigen Körpers gleichbleibend ausgestaltet ist und die Wandung des gesamten Gehäuses des Lenkhilfsantriebs bildet. Aufgrund der planen Ausgestaltung des Aufnahmekörpers 4 entsteht eine Montageplatte, an der eine Vielzahl verschiedener Komponenten befestigt werden können. Diese Komponenten sind insbesondere Antriebskomponenten, welche zwischen dem Motor und der Ausgangswelle, die die Kraft auf die Lenkstange bringt, angebracht sind.

Gemäß der dargestellten Variante des Lenkhilfsantriebs betreffen die Antriebskomponenten kraftübertragende Teile eines mehrstufigen Zugmittelgetriebes, welches als Kettengetriebe, als Riemengetriebe und bevorzugt als Zahnriemengetriebe ausgeführt ist. Damit ist das erfindungsgemäße Gehäuse besonders zur Aufnahme eines Riemengetriebes geeignet. Im Falle eines 2-stufigen Zahnriementriebes ist zumindest ein Drehübertragungsglied erforderlich, um in Gestalt einer Zwischenwelle eine antreibende Riemenverbindung zwischen dem Motor und der Zwischenwelle selbst zu bilden und andererseits die Drehbewegung auf die Ausgangswelle zu übertragen, wozu eine zweite Riemenverbindung erforderlich ist.

Gemäß der vorliegenden Erfindung dient der Aufnahmekörper 4 daher sowohl als Teil des Gehäuses als auch als Montageplatte bzw. Aufnahmeplatte. Ferner ist vorgesehen, dass der Aufnahmekörper 4 geometrische Ausgestaltungen aufweist, die wiederum Teile anderer Komponenten bilden. Gemäß Figur 1 weist der Aufnahmekörper 4 einen Bereich auf, welcher als Motorflansch 5 bezeichnet ist, so dass der Bereich des Aufnahmekörpers 4 den Flansch des Motors 2 bildet. Daher muss der Motor 2 lediglich an den Flansch angeordnet werden, wobei der Motor 2 an sich keinen vorderen Motorflansch benötigt, da dieser durch den Aufnahmekörper 4 bereits gebildet ist. Der übrige Motor 2 muss lediglich mittels Verbindungselementen am Motorflansch 5 angeordnet werden.

Figur 2 zeigt eine weitere quergeschnittene Seitenansicht des Aufnahmekörpers 4, wobei dieser wie obenstehend bereits erläutert einen Motorflansch 5 aufweist, an dem ein Motor 2 angebracht wird. Ferner weist der Aufnahmekörper 4 Gehäuseanformungen 6 auf, welche weitere geometrische Ausgestaltungen des gesamten Gehäuses des Lenkhilfsantriebs bilden. Beispielhaft sind Gewindebohrungen in den Gehäuseanformungen 6 eingebracht, wobei die Gehäuseanformungen 6 auch größer ausgestaltet werden können, so dass die gesamte Komponente, bestehend aus Aufnahmekörper 4 mit den Gehäuseanformungen 6 eine topfartige Ausgestaltung aufweist. Der Boden des Topfes ist durch den scheibenförmigen oder plattenartigen Aufnahmekörper 4 gebildet, wo sämtliche übrigen Anformungen weitere Funktionen erfüllen.

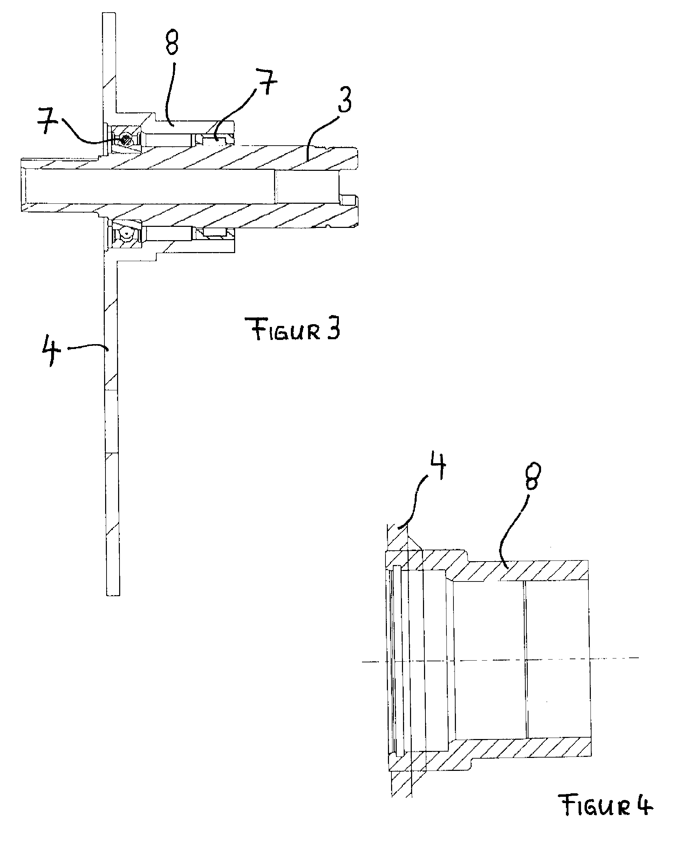

Figur 3 zeigt einen quergeschnittenen Bereich des Aufnahmekörpers 4, wobei in dem dargestellten Bereich eine Welle innerhalb des Aufnahmekörpers 4 gelagert ist, wobei die Welle beispielsweise die Ausgangswelle 3 sein kann. Dafür weist der Aufnahmekörper 4 eine Anformung auf, welche in Gestalt einer Lageraufnahmehülse 8 einteilig und materialeinheitlich am Aufnahmekörper 4 angeformt ist. Dies kann beispielsweise druckgusstechnisch erfolgen, wobei auch eine umformtechnische Herstellung der angeformten Lageraufnahmehülse 8 beispielsweise durch ein Tiefziehen im Aufnahmekörper 4 möglich ist. Zur Aufnahme der Ausgangswelle 3 ist eine Wellenlagerung 7 vorgesehen, welche mindestens eine, vorzugsweise zwei Lagerstellen aufweist.

Figur 4 zeigt eine andere Ausgestaltung der Lageraufnahmehülse 8, welche ein Einzelteil ist und mittels eines Fügeverfahrens am Aufnahmekörper 4 angebracht ist. Das Fügeverfahren kann beispielsweise ein Schweißverfahren, Löten, Einformen oder Verschrauben umfassen, so dass gemäß der Darstellung in Figur 4 eine Schweißkehle dargestellt ist.

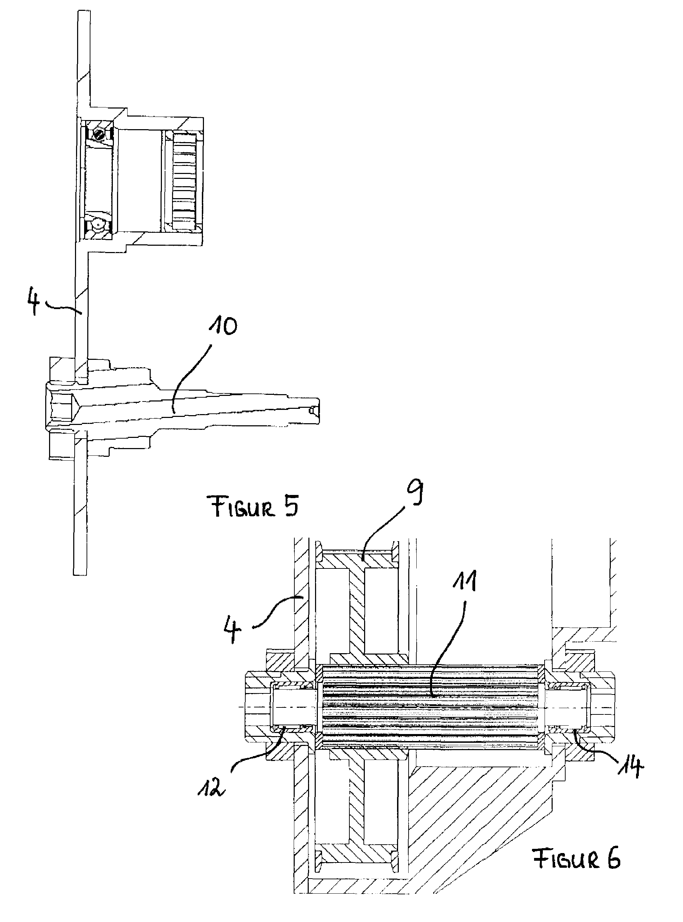

Figur 5 zeigt eine quergeschnittene Seitenansicht des Aufnahmekörpers 4 in einem Bereich, in dem eine Achse 10 in den Aufnahmekörper 4 eingebracht ist bzw. an diesem angeordnet ist. Wie vorstehend bereits erwähnt, kann dies zur Übertragung der Drehbewegung für das Zugmittelgetriebe nach Art eines Riemengetriebes vorgesehen sein. Hierfür ist ein Zwischenwelle 9 erforderlich sein, welches ebenfalls im Gehäuse gelagert werden muss. Um das Zugmittel wenigstens einmalig bei der Montage zu spannen, ist eine in der Radialebene des Aufnahmekörpers 4 erforderliche Justage der Achse 10 erforderlich, welche zudem in der justierten Position endgültig befestigt werden muss. Die Achse 10 sollte daher innerhalb der Radialebene des Aufnahmekörpers 4 leicht versetzt angeordnet werden können. Deshalb weist der Aufnahmekörper 4 einen Durchgang auf, der größer ist, als die Anformung an der Achse 10, welche sich durch den Durchgang hindurch erstreckt. Außenseitig weist der Körper der Achse 10 eine Gewindeanformung auf, auf der ein Konterelement angeordnet ist, um die Achse 10 mit dem Konterelement am Aufnahmekörper zu befestigten, indem die beiden Komponenten verspannt werden. Dies erfolgt erst nach getätigter Justage der genauen Position der Achse 10 am Aufnahmekörper 4.

In der Figur 6 ist beispielhaft eine weitere Ausführungsform der Aufnahme eines Drehübertragungsgliedes 9 gezeigt, wobei das Drehübertragungsglied 9 mittels einer Welle 11 im Aufnahmekörper 4 eingebracht ist und sich innerhalb einer Lagerung drehen kann. Die linksseitige Lagerung ist als erste Lagerung 12 bezeichnet, wobei rechtsseitig in einem weiteren Gehäuseteil eine zweite Lagerung 14 vorgesehen ist. Damit ist die Welle 11 zweifach gelagert, wobei die Lagerungen 12 und 14 innerhalb von Lageraufnahmehülsen angeordnet sind, die wiederum auf bereits obenstehend beschriebene Weise mittels eines jeweils zugeordneten Fixierelementes innerhalb des Aufnahmekörpers 4 bzw. dem übrigen Gehäuseteil verspannt werden können. Gemäß der Darstellung umfasst das Drehübertragungsglied 9 eine große Riemenscheibe und eine kleine Riemenscheibe, sodass die große Riemenscheibe mittels eines Riemens durch den Motor angetrieben wird und die mitdrehende kleine Riemenscheibe mit der Ausgangswelle mittels eines weiteren Riemens ebenfalls antreibend verbunden ist, und ein 2-stufiger Riemenantrieb gebildet wird. Zur Sicherung des axialen Spiels der Welle 11 ist diese mittels geeigneter Lager axial festzulegen und/oder mittels Anlaufscheiben gegen die Lageraufnahmen abgestützt, welche beispielsweise Federelemente oder Scheiben aus Kunststoff, Gummi oder Filz und dergleichen betreffen können.

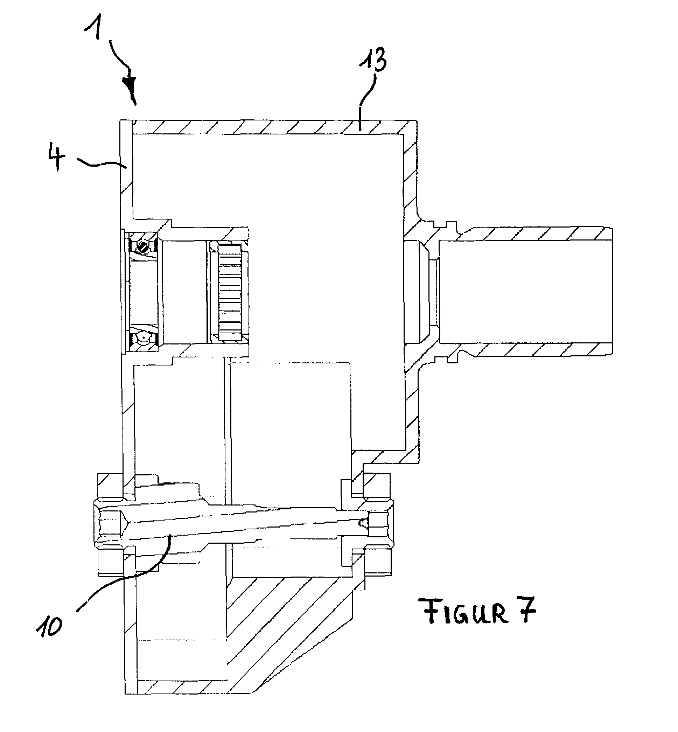

In Figur 7 ist eine weitere quergeschnittene Seitenansicht des Gehäuses 1 des Lenkhilfsantriebs gezeigt. Dieses umfasst erfindungsgemäß einen Aufnahmekörper 4, welcher die Montageplatte bildet. Die weitere Gehäusekomponente bildet der Gehäusedeckel 13, welcher je nach Anforderungen umlaufend abgedichtet oder auch nur punktuell auf dem Aufnahmekörper 4 aufgesetzt ist. Gemäß der Darstellung ist wiederum eine Achse 10 zwischen dem Aufnahmekörper 4 und dem Gehäusedeckel 13 angebracht, wobei die Achse 10 in der linksseitigen Aufnahme im Aufnahmekörper 4 axial- und radialfest verspannt ist, und in der Lagerung in der rechtsseitigen Aufnahme der Achse 10 im Gehäusedeckel 13 zwar radial geführt ist, jedoch axial beweglich aufgenommen ist, um ein entsprechendes Spiel ausgleichen zu können.

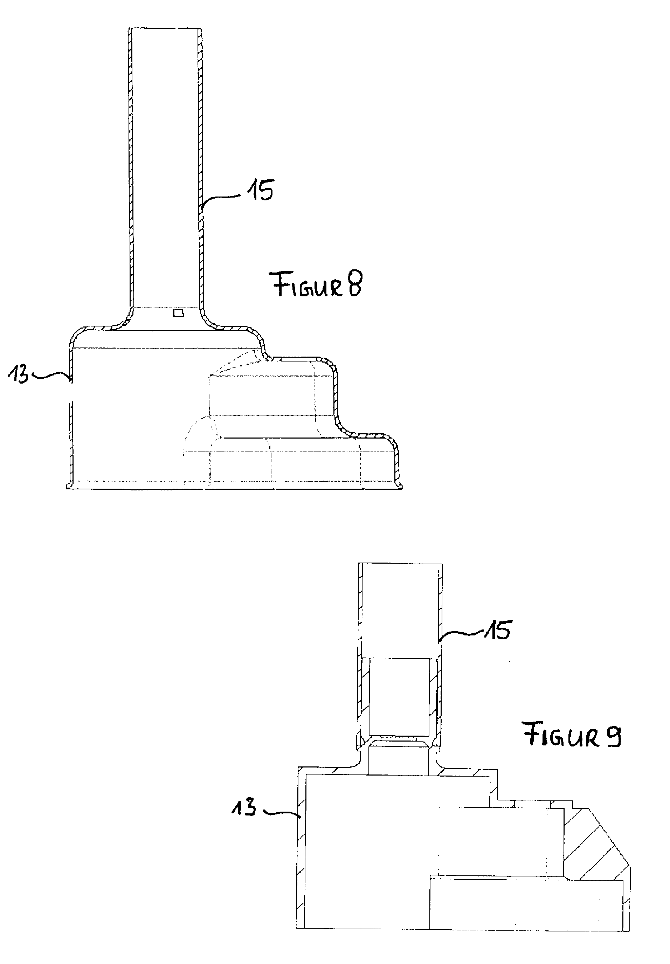

Figur 8 zeigt eine alternative Ausgestaltung des Gehäusedeckels 13, welcher eine Anformung aufweist, die eine Lenksäule 15 bildet. Der Gehäusedeckel 13 nimmt die wesentlichen Komponenten des Antriebs auf, wobei sich die Lenkwelle durch das Gehäuse 15 hindurch erstrecken kann. Aus Gründen der Vereinfachung der Konstruktion sowie der Herstellung kann vorgesehen sein, dass der Bereich der Lenksäule 15 und der Bereich der Gehäusedeckels 13 einteilig ausgeführt sind, indem der Bereich der Lenksäule 15 mittels eines Tiefziehverfahrens oder eines Um- bzw. Urformverfahrens hergestellt ist.

In Figur 9 ist eine alternative Ausgestaltung der Verbindung zwischen der Lenksäule 15 und dem Gehäusedeckel 13 dargestellt, wobei der Gehäusedeckel 13 einen hohlzylinderartigen Abschnitt aufweist, welcher sich in einen Abschnitt in die Längssäule 15 hinein erstreckt. Die beiden ineinander gefügten Abschnitte können eine Pressung oder zumindest eine entsprechende Passung aufweisen, so dass ein Reibschluss oder sogar ein Formschluss gebildet wird, um sowohl die Lenksäule 15 als auch den Gehäusedeckel 13 fest miteinander zu verbinden.

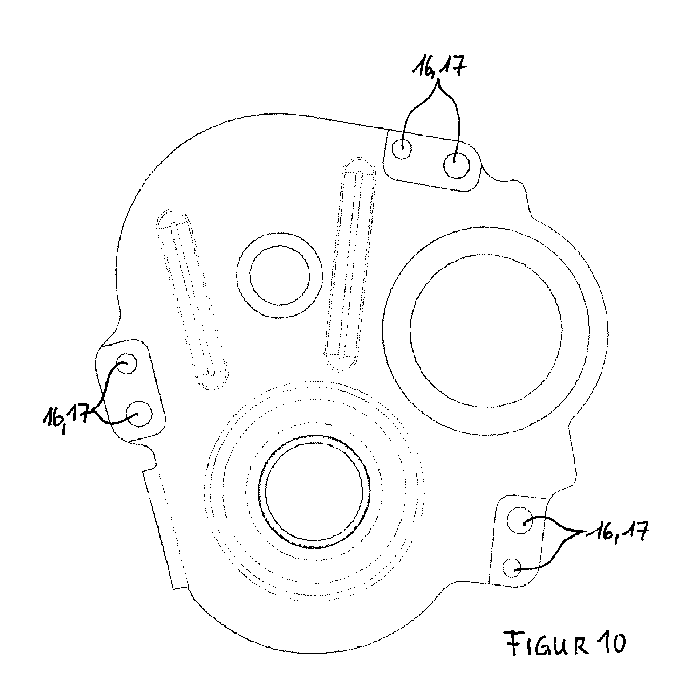

Figur 10 zeigt eine Draufsicht auf den Aufnahmekörper 4, wobei Durchgänge für die Motorwelle bzw. den Motorflansch und die Lenkwelle dargestellt sind. Ferner sind Langlöcher bzw. größere Durchmesser vorgesehen, um eine entsprechende Verstellung des Abstandes der Achse bzw. der Welle für das Drehübertragungsglied zum Durchgang zur Ausgangswelle sowie zur Anordnung des Motors zu schaffen, um die vorstehend beschriebene Riemenvorspannung des 2-stufigen Riemengetriebes einzustellen.

Erfindungsgemäß ist vorgesehen, dass der Aufnahmekörper 4 sowohl Haltelöcher 16 als auch Montagelöcher 17 aufweist, mittels derer der Aufnahmekörper 4 entweder an einem Werkstückträger montiert werden kann, um die übrigen Komponenten am Aufnahmekörper 4 zu montieren oder im Sinne von Haltelöchern 16 den Lenkhilfsantrieb über den Aufnahmekörper 4 im Fahrzeug bzw. an der Lenkungseinrichtung zu befestigen. Zur Versteifung können Sicken, umlaufende Borde etc. realisiert sein.

### Bezugszeichenliste

- **1**: Gehäuse
- **2**: Motor
- **3**: Ausgangswelle
- **4**: Aufnahmekörper
- **5**: Motorflansch
- **6**: Gehäuseanformung
- **7**: Wellenlagerung
- **8**: Lageraufnahmehülse
- **9**: Drehübertragungsglied
- **10**: Achse
- **11**: Welle
- **12**: erste Lagerung
- **13**: Gehäusedeckel
- **14**: zweite Lagerung
- **15**: Lenksäule
- **16**: Halteloch
- **17**: Montageloch

## Patentansprüche

1. Lenkhilfsantrieb für eine Lenkeinrichtung eines Kraftfahrzeugs zur Lenkkraftunterstützung mit einem Gehäuse (1), in und/oder an dem wenigstens ein Motor (2) aufgenommen ist, welcher mit einer Ausgangswelle (3) antreibend gekoppelt ist,
**dadurch gekennzeichnet, dass** der Lenkhilfsantrieb einen plattenartigen Aufnahmekörper (4) zur Aufnahme wenigstens einer Antriebskomponente aufweist, wobei der Aufnahmekörper (4) wenigstens einen Teil des Gehäuses (1) bildet.

2. Lenkhilfsantrieb nach Anspruch 1,
**dadurch gekennzeichnet, dass** eine Antriebskomponente ein Drehübertragungsglied (9) ist, welches als Getriebezwischenstufe zur antreibenden Kopplung zwischen einem Motor (2) und der Ausgangswelle (3) ausgebildet ist, sodass das Drehübertragungsglied (9) mittels einer Achse (10) und/oder einer Welle (11) im/oder am Aufnahmekörper (4) angeordnet ist.

3. Lenkhilfsantrieb (1) nach Anspruch 2,
**dadurch gekennzeichnet, dass** zur antreibenden Kopplung zwischen dem Motor (2) und der Ausgangswelle (3) ein mehrstufiges Zugmittelgetriebe, insbesondere ein Riemengetriebe, bevorzugt ein zweistufiges Zahnriemengetriebe, vorgesehen ist.

4. Lenkhilfsantrieb nach Anspruch 2 oder 3,
**dadurch gekennzeichnet, dass** die Welle (11) in wenigstens einer ersten Lagerung (12) drehbar gelagert ist, wobei die Lagerung (12) im Aufnahmekörper (4) aufgenommen ist.

5. Lenkhilfsantrieb nach einem der vorgenannten Ansprüche,
**dadurch gekennzeichnet, dass** der Aufnahmekörper (4) eine Aufnahme für einen Kabelabgang und/oder einen Kabeldurchgang aufweist.

6. Lenkhilfsantrieb nach einem der vorgenannten Ansprüche,
**dadurch gekennzeichnet, dass** zwischen dem als Teil des Gehäuses (1) ausgebildeten Aufnahmekörper (4) und wenigstens einem weiteren Gehäuseteil ein Dichtelement angeordnet ist.

7. Lenkhilfsantrieb nach einem der vorgenannten Ansprüche,
**dadurch gekennzeichnet, dass** das Gehäuse (1) einen Gehäusedeckel (13) aufweist, welcher auf dem Aufnahmekörper (4) aufgesetzt ist.

8. Lenkhilfsantrieb nach Anspruch 7,
**dadurch gekennzeichnet, dass** im Gehäusedeckel (13) eine zweite Lagerung (14) aufgenommen ist, welche konzentrisch zur Lagerung (12) angeordnet ist, sodass die Welle (11) wenigstens zweifach gelagert ist.

9. Lenkhilfsantrieb nach einem der vorgenannten Ansprüche,
**dadurch gekennzeichnet, dass** der Gehäusedeckel (13) wenigstens als Teilkomponente einer Lenksäule (15) ausgebildet ist.

10. Lenkhilfsantrieb nach einem der vorgenannten Ansprüche,
**dadurch gekennzeichnet, dass** der Aufnahmekörper (4) wenigstens ein Halteloch (16) und/oder wenigstens ein Montageloch (17) aufweist, um den Aufnahmekörper (4) auf einem Werkstückträger für die Montage aufzunehmen und/oder im Kraftfahrzeug zu befestigen.

11. Lenkhilfsantrieb nach einem der vorgenannten Ansprüche,
**dadurch gekennzeichnet, dass** Schraubverbindungen, Schweißen, Löten, Nieten oder Umformen für eine sichere Verbindung des Deckels auf dem Aufnahmekörper vorgesehen sind.

12. Lenkhilfsantrieb nach einem der vorgenannten Ansprüche,
**dadurch gekennzeichnet, dass** die Aufnahme für ein Fahrzeug im Aufnahmekörper und/oder Deckel integriert ist.
